# EUROPEAN PATENT SPECIFICATION

(11) **EP 0 898 820 B1**
(45) Date of publication and mention of the grant of the patent: **01.10.2003**
(21) Application number: 97923935.7
(22) Date of filing: 19.05.1997
(51) Int. Cl.: H04L 1/18

(54) **METHOD AND APPARATUS FOR POINT-TO-MULTIPOINT DATA COMMUNICATION WITH ARQ**
VERFAHREN UND VORRICHTUNG FÜR PUNKT-ZU-MEHRPUNKT-DATENÜBERTRAGUNG MIT ARQ
PROCEDE ET DISPOSITIF POUR COMMUNICATION DE DONNEES POINT A POINT AVEC DEMANDE DE REPETITION AUTOMATIQUE (ARQ)

(30) Priority: 17.05.1996 GB 9610337
(43) Date of publication of application: 03.03.1999
(73) Proprietor: MOTOROLA LTD, Basingstoke, Hampshire RG22 4PD (GB)
(72) Inventor: ROBINSON, William, Neil, F-78860 Saint Nom-La-Breteche (FR); WHINNETT, Nicholas, William, F-75004 Paris (FR); GIBBS, Jonathan, Alistair, Southampton, Hampshire SO30 2UL (GB)
(74) Representative: Potts, Susan Patricia
(86) International application number: EP9702545
(87) International publication number: WO97044927

(56) References cited:
- EP-A- 0 635 952
- GLOBECOM '82. IEEE GLOBAL TELECOMMUNICATIONS CONFERENCE, MIAMI, FL, USA, 29 NOV.-2 DEC. 1982, 1982, NEW YORK, NY, USA, IEEE, USA, pages 702-706 vol.2, XP002039294 LUGAND L ET AL: "A comparison of three hybrid ARO schemes using convolutional codes on a non-stationary channel"
- IEEE 44TH VEHICULAR TECHNOLOGY CONFERENCE, VTC'94, STOCKHOLM, SE, vol. 3, 8 - 10 June 1994, pages 1407-1411, XP000497652 AGHADAVOODI JOLFAEI M. ET AL.: "Improved Selective Repeat ARQ Schemes for Data Communication" cited in the application

## Description

### Field of Invention

The present invention is generally related to communication devices and systems, and more particularly, to a method and apparatus for transmitting data in a communication system.

### Background of the Invention

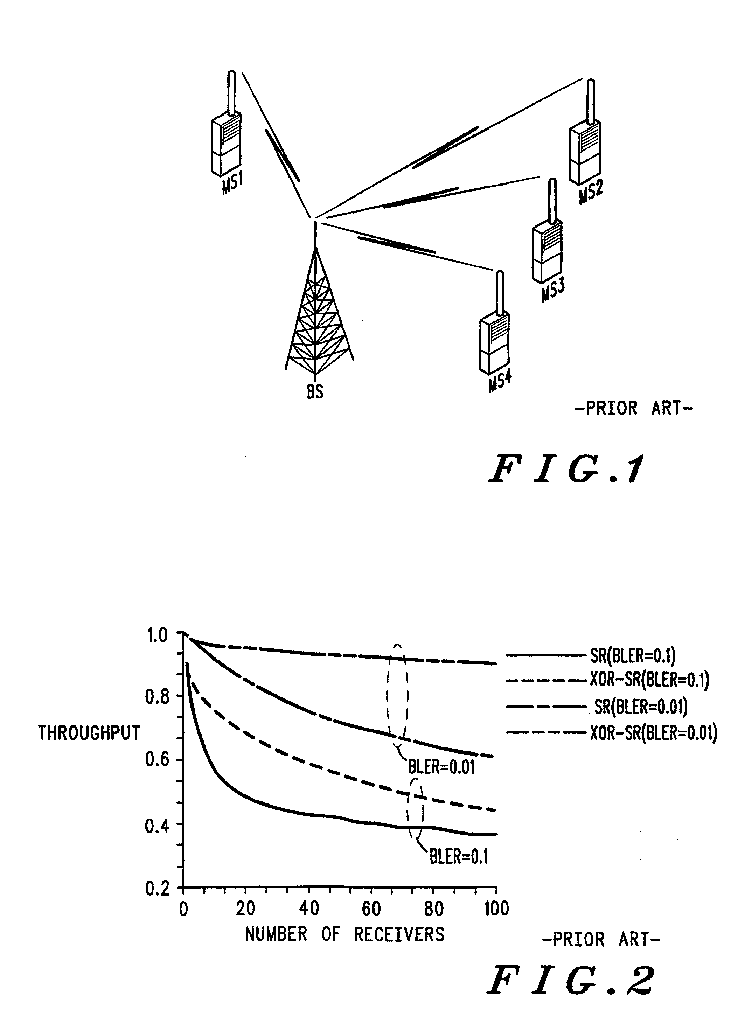

There is great demand for reliable point-to-multipoint data services, as provided by a point-to-multipoint communication network shown in FIG. 1. In particular, a transmitting terminal (BS) receives data signals from a transmitting terminal MS1, and transmits the data signals to multiple receiving terminals (MS2, MS3 and MS4). Protocols for point-to-point data transfer typically rely on windowing protocols, which protect terminals from overflow conditions. When transferring data over a radio interface, it is likely to be the radio interface rather than the buffering capability of the terminal which will be the rate-determining factor. This is a factor which, when combined with a requirement to provide a point-to-multipoint data transfer, dramatically changes the degrees of freedom available when designing an optimum data transfer protocol.

For packet switched communications, ARQ (Automatic Repeat Request) protocols have been designed for point-to-multipoint applications which are able to cope with stringent memory requirements, but they either lack integrity at high block error rates, or they require a large bandwidth due to low throughput. The various ARQ methods differ in the transmissions of erroneous blocks. With continuous ARQ strategies, the sender continuously transmits new blocks, and the receiver accepts each error-free block and acknowledges it by sending an ACK message. On receipt of an erroneous block, the receiver negatively acknowledges the block by sending a "NACK". When the NACK arrives at the sender, the transmission of the blocks is interrupted. In case of the "Go-Back-N" strategy, the sender does not only retransmit the negative acknowledge block, but also all the following blocks. These are the blocks which have been transmitted over one round trip delay after the erroneous block. In contrast, the selective repeat strategy (SR), the sender retransmits only the negatively acknowledged block. These strategies are also used for point-to-multipoint communications. In this case. blocks are considered to be correct if the blocks are correctly received by all receivers. Accordingly, the sender decides about retransmissions of a block after receiving acknowledgements from all K receivers.

An example of an ARQ scheme is presented in "A Comparison of Three Hybrid ARQ Schemes Using Convolutional Codes on a Non-Stationary Channel" by Lugand and Costello; Conference Proceedings; Globecom 1982; IEEE. The article describes an ARQ scheme wherein a NACK message is sent for every error detected at the receiver. However, re-transmission of data is performed after reception of the second NACK message.

Because data packet services require the transmission of many data packets at a very low bit error rate, there is a need to maximise the throughput for wireless point-to-multipoint protocols. In a paper entitled "Improved Selective Repeat ARQ Schemes for Data Communication" by M Aghadavoodi et al. presented at the VTC '94 Conference, an improved strategy for multicast communication is disclosed. As set forth in the paper, with the exclusive or, selective repeat (XOR-SR) technique, the sender does not retransmit NACKed blocks immediately upon reception of a NACK, but it gathers window numbers of ACK/NACK acknowledgements and then decides on retransmitting not acknowledged blocks. Several NACKed blocks are combined by XORing (i.e. modulo-2-adding) them to minimise the number of retransmissions and to increase throughput. The basic XOR retry mechanism allowing the efficient calculation by multiple mobile terminals of the correct value of one bad block per terminal is well known in the prior art. The resulting block is called an XOR block.

A receiver expecting a particular block must be able to reconstruct it from the XOR block (i.e. it must know all other blocks comprising the XOR block). Applying the XOR operation again to the XOR block with all the participating and correctly received blocks the receiver obtains the expected block. Thus, the basic strategy is to combine as many NACKed blocks in an XOR block as possible, while ensuring that each intended receiver will know all but one of the participating blocks. FIG. 2 shows a simulation of the improvement of throughput as a function of the number of receivers for the XOR-SR compared to the SR scheme. Although the XOR-SR scheme provides improvement, it is nevertheless suboptimal for a point-to-multipoint data transfer.

Accordingly, there is also a need for a method and apparatus for efficiently transmitting data in a point-to-multipoint system.

There is also a need for a method for dynamically defining a data recovery window in a communication network.

### Brief Description of the Drawings

FIG. 1 is a block diagram of a communication system having point-to-multipoint data transmission capability according to the present invention;
FIG. 2 is a chart showing the throughput of data according to conventional SR and XOR-SR schemes
FIG. 3 is a diagram showing frames of receiving terminals according to the present invention;
FIGS. 4A and 4B are a flow diagram showing the preferred method of transmitting data according to the present invention.
FIG. 5 is a chart showing the throughput of data according to the present invention, compared to conventional XOR-SR techniques;
FIG. 6 is a block diagram of a terminal incorporating the present invention;
FIG. 7 is a block diagram of a transmitting portion of control circuit of FIG. 6 according to the present invention; and
FIG. 8 is a block diagram of a receiving portion of control circuit of FIG. 6 according to the present invention.

### Detailed Description of the Invention

The present invention provides an efficient means for delivering data to multiple wireless destinations by the issuing of a negative acknowledge message from a receiving terminal upon detecting a second outstanding block error, followed by the sending by the transmission source of an error detection block for all the blocks up to but not including the block with the second detected error, which gives rise to the benefit of greater throughput, especially for point-to-multipoint transfers.

The data to be transmitted is segmented into blocks of a known fixed size. Each block is given a sequence number and an error detection field is added. The blocks are transmitted in sequence. Each receiver is independent of the other receivers and decodes the incoming blocks. Every receiver performs the error detection function on every received block and detects whether or not the block has been received correctly. Sequencing and error detection mechanisms are both very well known to those skilled in the art. Generally, each transmitted block includes a sequence number, a verification field, and an error detection field. The receiving terminal generates an error detection value, and compares it to the error detection field of the received block.

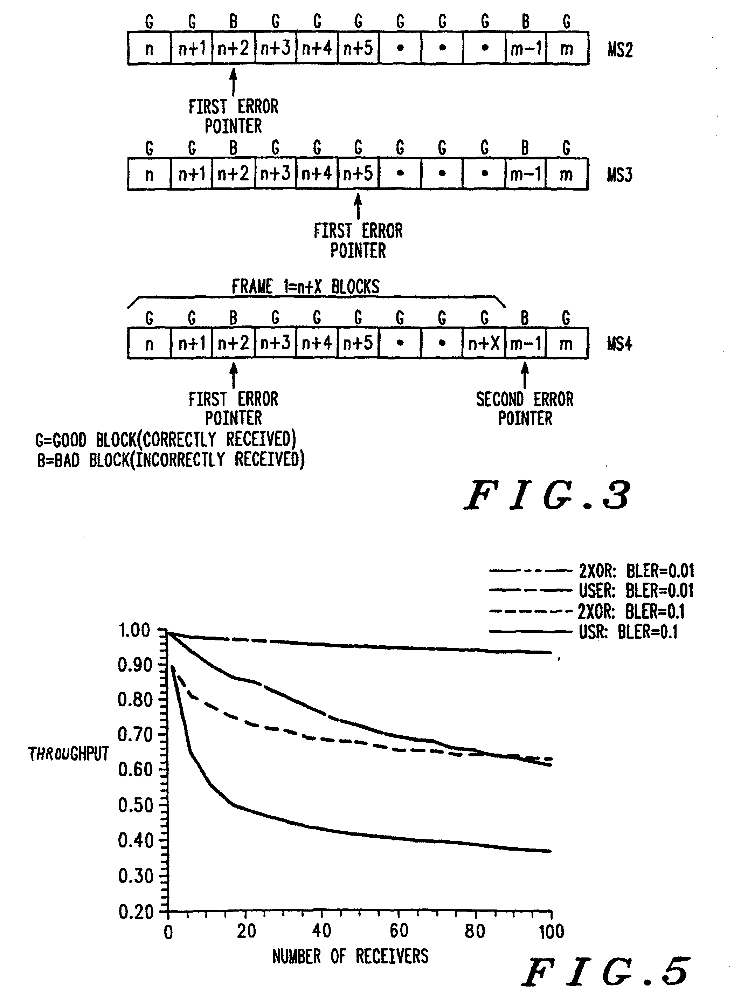

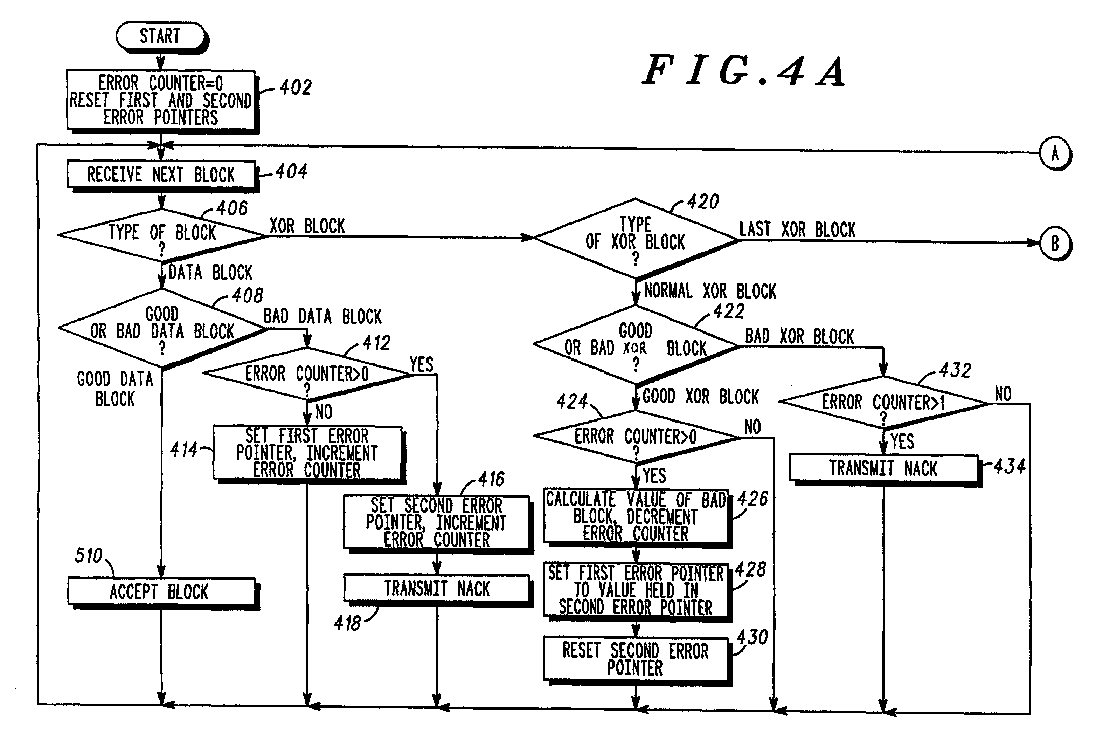

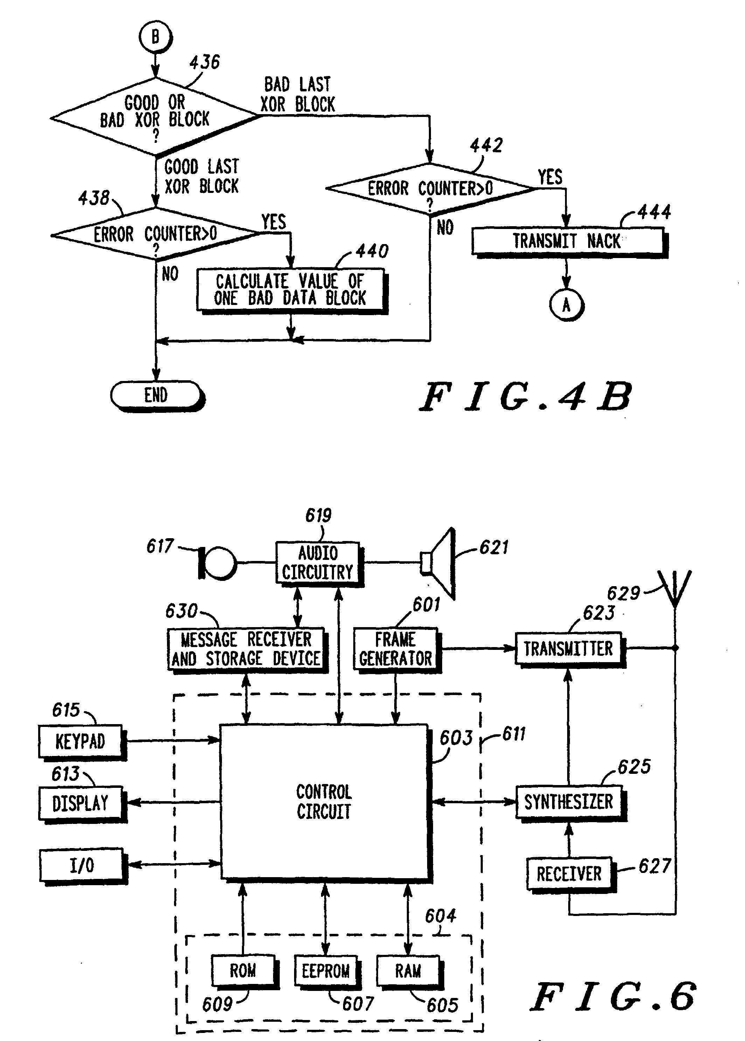

The method for transmitting data according to the present invention will be described in more detail in reference to the frame diagrams of FIG. 3 and the flow chart of FIG. 4. According to one novel feature of the present invention, the first incorrect block which is detected in a mobile terminal does not cause a negative acknowledgement to be transmitted back to the transmitting terminal. Instead, a pointer identified here as "First Error Pointer" in each receiving terminal is configured to point at the sequence number of the bad block received by that terminal, as shown in FIG. 3. This is possible because the blocks have been transmitted in sequence and are associated with a sequence number. The data transfer continues, with each receiving terminal effectively remembering which block has been incorrectly received based upon the First Error Pointer.

A counter of all the outstanding incorrectly received data blocks is also maintained at all times by each receiving terminal. If a receiving terminal subsequently detects a second block which has been incorrectly received, a second pointer identified here as "Second Error Pointer" is configured to point at the sequence number of the second bad block. At this point, a negative acknowledgement ("NACK") is transmitted by the receiving terminal receiving the second bad block to the transmitting terminal, which is normally a transmitting terminal shown in Figure 1. Given that multiple mobile terminals may be attempting to transmit a NACK at the same time (e.g. MS2 and MS4 of FIG. 3), a simple energy burst would be a suitable technique for this NACK message. Such an energy burst technique is described in detail in British Patent Publication No. GB-A-2 287 383 When the transmitting terminal receives the NACK message, it transmits an error correction block which is sufficient for all of the terminals which have an outstanding block error to calculate the correct value for the incorrect block regardless of the position of the incorrect block in sequence of blocks. Preferably, an XOR scheme, which is well known in the art, is used for generating an error correction block. The remaining description will include references to the XOR scheme. However, other error correction schemes could be used. Upon receiving an XOR block, the terminal calculates the correct value for the bad block and then moves the value stored in Second Error Pointer into the First Error Pointer and deletes the contents of the Second Error Pointer.

A mobile terminal may have only detected one block error, when the transmitting terminal transmits an XOR block. This may occur because one of the other terminals had transmitted a NACK to the transmitting terminal. As shown for example in FIG. 3, MS2 and MS3 had only received one error block when MS4 received its second error block. In this case, the mobile terminals with only one block error is able to calculate the correct value of the bad block and delete the contents of the First Error Pointer.

It may sometimes be the case that an XOR block itself is incorrectly received, by a terminal which needs the XOR block to re-calculate the first of its two bad blocks. If this occurs, the terminal transmits a NACK message to the transmitting terminal in response to the XOR bad block. However, if a terminal had received only one error when the XOR block is incorrectly received, it is not necessary to transmit the NACK message. Rather, the receiver with only one outstanding block error can wait for the next transmission of the XOR block when it or another terminal detects a second block error. The last block to be transmitted is a special XOR block which covers the complete data set and is used by all of the mobile terminals which have an outstanding block error to re-calculate the correct value of the bad block. This XOR block is always negatively acknowledged if incorrectly received by a terminal which has a bad block to recover.

Referring specifically to FIGs. 4A and 4B, the preferred steps for transmitting data according to the present invention are shown. At a step 402, the receiving terminal sets an error counter equal to zero and resets the first and second error pointers. At a step 404, the receiving terminal receives the next block of data and determines whether the block is a data block or an XOR block at a step 406. If the block is a data block, the receiving terminal determines whether the block is a good or bad data block at a step 408. If it is a good data block, the terminal accepts the block at a Step 410. However, if it is a bad data block, the receiving terminal determines whether the error counter is greater than zero at a step 412. If the error counter is not greater than zero, the receiving terminal sets the first error pointer to the data block and increments the error counter at a step 414. However, if the error counter is greater than zero, the receiving terminal sets the second error pointer and increments the error counter at a step 416. In this case, the receiving terminal also transmits a NACK at a step 418.

If the block is an XOR block, the receiving terminal determines whether the XOR block is a normal block or the last XOR block which is sent at a step 420. If it is a normal XOR block, the receiving terminal determines whether it is a good or bad XOR block at a step 422. If it is a good XOR block, the receiving terminal determines whether the error counter is greater than zero at a step 424. If the error counter is greater than zero, the receiving terminal calculates the value of the bad block from the XOR block, and decrements the error counter at a step 426. The terminal also sets a first error pointer to a value held in the second error pointer at a step 428. Finally, the receiving terminal resets the second error pointer at a step 430. However, if it is a bad XOR block, the receiving terminal determines whether the error counter is greater than one at a step 432. If the error counter is greater than one, the receiving terminal transmits a NACK at a step 434.

However, if it is the last XOR block, the receiving terminal determines whether it is a good or bad XOR block at a step 436. If it is a good XOR block, the receiving terminal determines whether the error counter is greater than zero at a step 438. If the error counter is greater than zero, the terminal calculates the value of the bad error block at a step 440. The receiving terminal terminates receiving data at that point. However, if the error counter is not greater than zero, the receiving terminal terminates receiving data at this point.

If the last XOR block is a bad block, the receiving terminal determines whether the error counter is greater than zero at a step 442. If it is not greater than zero, the receiving terminal terminates the receiving data at that time. Otherwise, the receiving terminal transmits a NACK at a step 444 to receive another XOR block.

Figure 5 shows the throughput of data of the present invention compared with the conventional XOR-SR protocol. As compared with FIG. 2, it can be clearly seen that the method of the present invention has a significantly better throughput than the conventional SR or XOR-SR protocols. This advantage is particularly noticeable for higher Block Error Rate (BLER) values, for example 0.1, where the XOR-SR protocol tends to approach the performance of simple selective retry for large numbers of receiving terminals, whereas the invention described here continues to be significantly better than the simple SR protocol, and in fact stays well above 0.6 even when there are 100 receiving terminals.

Turning now to FIG. 6, a block diagram of a terminal for implementing the present invention is shown. In the preferred embodiment, an ASIC (Application Specific Integrated Circuit) 601, such as a CMOS ASIC available from Motorola, Inc. and microprocessor 603, such as a 68HC11 microprocessor also available from Motorola, Inc., combine to generate the necessary communication protocol for operating in a cellular system. The microprocessor 603 uses RAM 605, EEPROM 607, and ROM 609, consolidated in one package 611 in the preferred embodiment, to execute the steps necessary to generate the protocol and to perform other functions for the communication unit, such as writing to a display 613, accepting information from a keypad 615, and controlling a frequency synthesizer 625. The ASIC 601 processes audio transformed by the audio circuitry 619 from a microphone 617 and to a speaker 621. Transmitter 623 transmits through an antenna 629 using carrier frequencies produced by the frequency synthesizer 625. Information received by the communication unit's antenna 629 enters the receiver 627 which demodulates the symbols comprising the message frame using the carrier frequencies from the frequency synthesizer 625. The wireless communication device may optionally include a message receiver and storage device including digital signal processing means. The message receiver and storage device could be, for example, a digital answering machine or a paging receiver. While the circuitry of FIG. 6 shows an exemplary wireless communication device, other circuitry could be employed within the scope of the present invention.

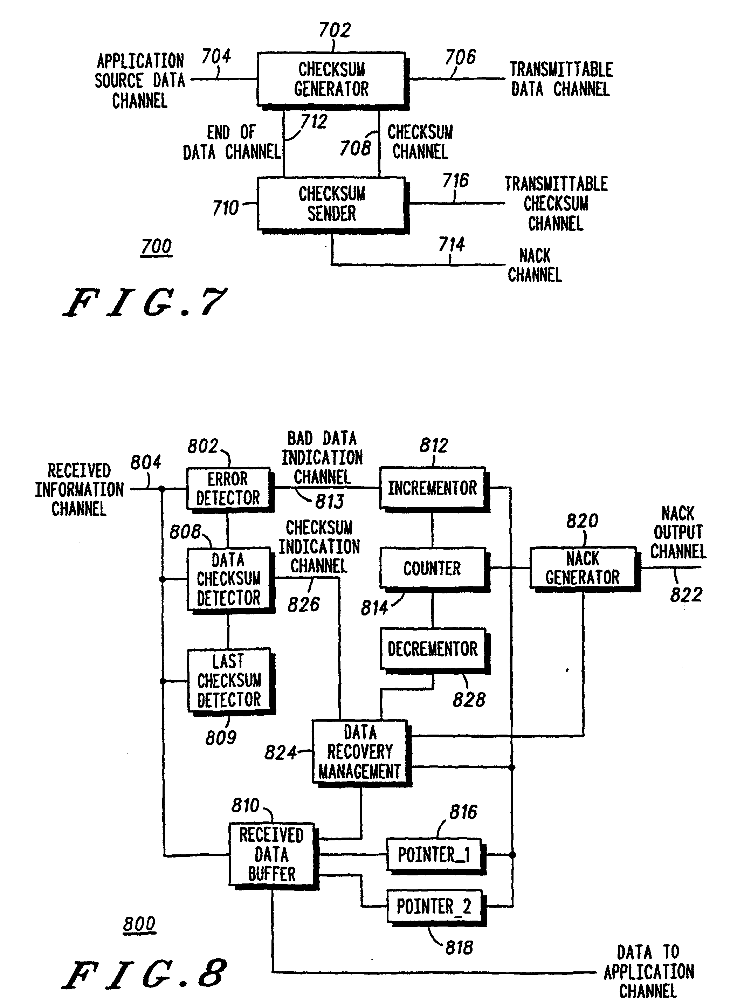

Turning now to FIG. 7, a block diagram shows transmitter portion 700 of control circuit 603 according to the present invention. Transmitter control circuit 700 includes a checksum generator 702 which receives data on an application source data channel 704. The checksum generator also outputs the data blocks to be transmitted on a transmittable data channel 706. The checksum generator generates a checksum signal on checksum channel 708 which is input to a checksum sender 710. Checksum sender 710 also receives an end of data signal on end of data channel 712 and a NACK signal on a NACK channel 714. The checksum sender generates a checksum signal on a transmittable checksum channel 716 when the NACK is received. The checksum sender generates a checksum signal on a transmittable checksum channel 716 when the end of data signal is received.

Turning now to FIG. 8, the receiver portion 800 of control circuit 603 is shown according to the present invention. Receiver portion 800 includes an error detector 802 which receives data blocks and checksum blocks on the received information channel 804. The data checksum detector 808 is coupled to error detector 802, last checksum detector 809 and data recovery manager 824. The data checksum detector instructs the data recovery manager if a good checksum, a bad checksum, a good last checksum or a bad last checksum is detected. A checksum detector 808, a last checksum detector 809, and a received data buffer 810 also receive the data blocks and checksum blocks on information channel 804. Error detector 802 is coupled to an incrementor 812 and bad data checksum detector 808. In particular, error detector 802 generates an error signal on bad data indication channel 813 when an error in a data block is detected. Bad data indication channel 813 is coupled to incrementor 812, which increments a counter 822 when an error is detected. A first pointer 816 is established to designate the location of the first data block having an error in received data buffer 810. Similarly, a second pointer 818 is established to designate the location of the second data block having an error.

Counter 814 is coupled to a NACK generator 820 for generating a NACK signal on NACK output channel 822 after the counter indicates that two block errors have been recorded. NACK generator 820 is also coupled to a data recovery manager 824. NACK generator 820 also generates a NACK signal when instructed to do so by the data recovery manager. Data recovery manager 824 receives a signal on checksum indication channel 826 indicating a good or bad checksum or a good or bad last checksum. If a bad last checksum was received or if a bad checksum was received when two block errors had been received, the data recovery manager instructs the NACK generator to generate a NACK. If the data recovery manager is able to recover the data in an erroneous block, a decrementor 828 decrements counter 814, the value in pointer 2 is moved into pointer 1 and pointer 2 becomes empty.

The present invention is at its most efficient where there are no buffer limitations in the mobile terminal, which is normally the case. However, the protocol does not prevent "Ready to Receive" type protocols from operating in addition to the present invention. "Ready to Receive" protocols are well known to those skilled in the art. Although multiple receiving terminals are shown, the present invention can be incorporated in a system having a single transmitting terminal and a single receiving terminal. Also, the present invention can be applied to any communication network, whether wireless or landline, for transmitting data of any kind. For example, the method and apparatus could be employed in cellular communication systems, wireless messaging systems, paging systems, or other communication systems.

In summary, the present invention provides an efficient means for delivering data to multiple wireless destinations by the issuing of a negative acknowledge message from a receiving terminal upon detecting a second outstanding block error, followed by the sending by the transmission source of an XOR block for all the blocks up to but not including the block with the second detected error. The present invention finds particular application in point-to-multipoint transfers. While the specific implementations of the present invention are described above, variations and modifications could be made by one skilled in the art within the scope of the present claims.

## Claims

1. A method for transmitting data from a transmitting terminal to at least one receiving terminal in a communication system, said method comprising the steps of:
sequentially transmitting blocks of data from said transmitting terminal (404);
and **characterised by** further comprising the steps of:
receiving a negative acknowledge message (418) from a receiving terminal, said negative acknowledge message (418) indicating that a first error in a first block of data and a second error in a subsequent second block (416) of data have been detected; and
transmitting (404) an error correction block to allow the correction the first error in the first block of data.

2. A method for transmitting data according to claim 1, wherein said step of transmitting an error correction block comprises transmitting a block (404) having an XOR of all blocks before the second error.

3. A method for transmitting data according to claim 1, wherein said step of sequentially transmitting blocks of data (404) comprises transmitting blocks of data to a plurality of receiving terminals.

4. A method for transmitting data according to claim 3, further including a step of receiving said error correction block at each said receiving terminal.

5. A method for transmitting data according to claim 4, further including a step of decoding (440), at each said receiving terminal, said XOR block to recover the data in a first error block detected by that terminal.

6. A method for receiving data at a receiving terminal of a communication network, said method comprising the steps of:
sequentially receiving (404) blocks of data at the terminal;
detecting (408) a first error in a block of transmitted data;
detecting (408) a second error in a subsequent second block (416) of transmitted data; and **characterised by** further comprising the steps of:
sending a negative acknowledge message (418) only upon detecting the second error.

7. A method for receiving data according to claim 6, further including a step of determining (406) whether an error is detected in a data block or an error correction block.

8. A method for receiving data according to claim 7, further including a step of incrementing (414) an error counter when an error is detected.

9. A method for receiving data according to claim 6, further including a step of setting (414) a first error pointer at a receiving terminal designating the block having the first error.

10. A method for receiving data according to claim 9, further including a step of setting (416) a second error pointer at a receiving terminal designating the block having the second error.

11. A method for receiving data according to claim 8, wherein said step of sending a negative acknowledge (418) comprises sending a negative acknowledge upon receiving a bad data block prior to the error counter being incremented if said error counter is greater than zero.

12. A method for receiving data according to claim 8, wherein said step of sending a negative acknowledge (418) comprises sending a negative acknowledge upon receiving a bad error correction block if said error counter is greater than one.

13. A method for receiving data according to claim 8, further comprising a step of withholding a negative acknowledge upon receiving a bad error correction block if said error counter is less than or equal to one.

14. A method for receiving data according to claim 6, further including a step of receiving (404,406,420) an error correction block having data allowing the receiving terminal to calculate the correct data for the block having the first error.

15. A method for receiving data according to claim 13, wherein said step of receiving (404,406,420) an error correction block comprises receiving a transmission of a block having an XOR of all blocks before the second error.

16. A method for transmitting data according to claim 15, further including a step of decoding said XOR block to recover the block having the first error.

17. A method for receiving data according to claim 6, further including a step of transmitting is a special error correction block which covers the complete data set

18. The method for receiving data according to claim 17, further including a step of each said mobile terminals which have an outstanding block error recalculating the correct value of the first bad block received by that terminal.

19. A method for receiving data according to claim 18, further including a step of transmitting a negative acknowledge if said special error correction block is incorrectly received by a terminal which has a bad block to recover.

20. An apparatus for receiving data transmitted in a communication network, said apparatus comprising:
a receiver (627) for sequentially receiving blocks of data;
a detector (802) for detecting a first error in a block of transmitted data and a second error in a subsequent block of transmitted data; and
**characterised by** further comprising:
a transmitter (820,623) for sending a negative acknowledge message only upon detecting the second error.

21. An apparatus for receiving data according to claim 20, further comprising a checksum detector (808).

22. An apparatus for receiving data according to claim 21, wherein said checksum detector detects error correction blocks.

23. An apparatus for receiving data according to claim 22, further comprising a last checksum detector (809).

24. An apparatus for receiving data according to claim 20, further including a received data buffer (810) which receives and stores blocks of data and error correction blocks.

25. An apparatus for receiving data according to claim 20, further including an incrementor (812) coupled to said detector to increment a counter when an error is detected.

26. An apparatus for receiving data according to claim 25, further including an decrementor (828) coupled to said detector to decrement a counter when an error is corrected.

27. An apparatus for receiving data according to claim 26, further including a counter (814) for recording errors in said block of data received by said receiver.

28. An apparatus for receiving data according to claim 27, further including a NACK generator (820) which generates a NACK signal when a last checksum is detected by said last checksum detector (809) or when an error in the checksum is detected by the data checksum detector (808) after two error blocks have been received.

29. An apparatus for receiving data according to claim 20, further including a first pointer (816) which designates the location of a first data block having an error in the received data buffer.

30. An apparatus for receiving data according to claim 20, further including a second pointer (818) which designates the location of a second data block having an error in the received data buffer.

31. An apparatus for receiving data according to claim 20, further including a data recovery manager (824) which is able to recover the data in an erroneous data block, and cause said decrementor to decrement said counter.

32. The apparatus for receiving data according to claim 31, wherein said data recovery manager (824) further initiates the sending of a NACK signal by said NACK generator (820) when said data recovery manager receives a signal indicating that an error in a last checksum block was detected, or an error in the checksum was detected when the receiver had detected two data block errors.

33. An apparatus for transmitting data from a transmitting terminal to at least one receiving terminal in a communication system, said apparatus comprising:
means for sequentially transmitting blocks of data from said transmitting terminal;
and **characterised by** further comprising:
means for receiving a negative acknowledge message from a receiving terminal, said negative acknowledge message indicating that a first error in a first block of data and a second error in a subsequent second block of data have been detected; and
means for transmitting an error correction block to allow the correction the first error in the first block of data.

## Patentansprüche

1. Verfahren zum Übertragen von Daten von einer Sendestation zu wenigstens einer Empfangsstation in einem Kommunikationssystem, wobei das Verfahren die Schritte umfasst:
Sequentielles Senden von Datenblöcken von der Sendestation (404) aus;
und **dadurch gekennzeichnet, dass** es weiterhin die Schritte umfasst:
Empfangen einer negativen Bestätigungsnachricht (418) von einer Empfangsstation, wobei die negative Bestätigungsnachricht (418) anzeigt, dass ein erster Fehler in einem ersten Datenblock und ein zweiter Fehler in einem folgenden, zweiten Datenblock (416) von Daten entdeckt worden ist; und
Senden (404) eines Fehlerkorrekturblocks, um die Korrektur des ersten Fehlers in dem ersten Datenblock zu gestatten.

2. Verfahren zum Übertragen von Daten gemäß Anspruch 1, wobei der Schritt des Sendens eines Fehlerkorrekturblocks das Senden eines Blocks (404) mit einer XOR-Verknüpfung aller Blöcke vor dem zweiten Fehler umfasst.

3. Verfahren zum Übertragen von Daten gemäß Anspruch 1, wobei der Schritt des sequentiellen Sendens von Datenblöcken (404) das Senden von Datenblöcken an eine Mehrzahl von Empfangsstationen umfasst.

4. Verfahren zum Übertragen von Daten gemäß Anspruch 3, weiter umfassend einen Schritt des Empfangens des Fehlerkorrekturblocks bei jeder Empfangsstation.

5. Verfahren zum Übertragen von Daten nach Anspruch 4, weiter umfassend einen Schritt des Dekodierens (440) des XOR-Blocks an jeder Empfangsstation, um die Daten in einem ersten, von dieser Station entdeckten Fehlerblock wiederherzustellen.

6. Verfahren zum Empfangen von Daten an einer Empfangsstation eines Kommunikationsnetzes, wobei das Verfahren die Schritte umfasst:
Sequentielles Empfangen (404) von Datenblöcken an der Station;
Erkennen (408) eines ersten Fehlers in einem Block übertragener Daten;
Entdecken (408) eines zweiten Fehlers in einem folgenden, zweiten Block (416) übertragener Daten;
und **dadurch gekennzeichnet, dass** es weiter die Schritte umfasst:
Senden einer negativen Bestätigungsnachricht (418) lediglich bei Erkennung des zweiten Fehlers.

7. Verfahren zum Empfangen von Daten gemäß Anspruch 6, weiter umfassend einen Schritt des Bestimmens (406), ob ein Fehler in einem Datenblock oder einem Fehlerkorrekturblock erkannt wurde.

8. Verfahren zum Empfangen von Daten gemäß Anspruch 7, weiter umfassend einen Schritt des Heraufsetzens (414) eines Fehlerzählers, wenn ein Fehler erkannt wird.

9. Verfahren zum Empfangen von Daten gemäß Anspruch 6, weiter umfassend einen Schritt des Setzens (414) eines ersten Fehler-Pointers bei einer Empfangsstation, welcher den Block mit dem ersten Fehler bezeichnet.

10. Verfahren zum Empfangen von Daten gemäß Anspruch 9, weiter umfassend einen Schritt des Setzens (416) eines zweiten Fehler-Pointers bei einer Empfangsstation, welcher den Block mit dem zweiten Fehler bezeichnet.

11. Verfahren zum Empfangen von Daten gemäß Anspruch 8, wobei der Schritt des Sendens einer negativen Bestätigung (418) das Senden einer negativen Bestätigung bei Empfang eines schlechten Datenblocks bevor der Fehlerzähler heraufgesetzt wird umfasst, falls der Fehlerzähler größer als null ist.

12. Verfahren zum Empfangen von Daten gemäß Anspruch 8, wobei der Schritt des Sendens einer negativen Bestätigung (418) das Senden einer negativen Bestätigung bei Empfang eines schlechten Fehlerkorrekturblocks umfasst, falls der Fehlerzähler größer als eins ist

13. Verfahren zum Empfangen von Daten gemäß Anspruch 8, weiter umfassend einen Schritt des Zurückhaltens einer negativen Bestätigung bei Empfang eines schlechten Fehlerkorrekturblocks, falls der Fehlerzähler kleiner oder gleich eins ist.

14. Verfahren zum Empfang von Daten gemäß Anspruch 6, weiter umfassend einen Schritt des Empfangens (404, 406, 420) eines Fehlerkorrekturblocks mit Daten, welche es der Empfangsstation gestatten, die korrekten Daten für den Block mit dem ersten Fehler zu berechnen.

15. Verfahren zum Empfangen von Daten gemäß Anspruch 13, wobei der Schritt des Empfangens (404, 406, 420) eines Fehlerkorrekturblocks das Empfangen einer Übertragung eines Blocks mit einer XOR-Verknüpfung aller Blöcke vor dem zweiten Fehler umfasst.

16. Verfahren zum Senden von Daten gemäß Anspruch 15, weiter umfassend einen Schritt des Dekodierens des XOR-Blocks, um den Block mit dem ersten Fehler wiederherzustellen.

17. Verfahren zum Empfangen von Daten gemäß Anspruch 6, weiter umfassend einen Schritt des Sendens eines speziellen Fehlerkorrekturblocks, welcher den vollständigen Datensatz abdeckt.

18. Verfahren zum Empfangen von Daten gemäß Anspruch 17, weiter umfassend einen Schritt, bei dem jede Mobilstation mit einem ausstehenden Blockfehler den korrekten Wert des ersten, von dieser Station empfangenen, schlechten Blocks erneut berechnet.

19. Verfahren zum Empfangen von Daten gemäß Anspruch 18, weiter umfassend einen Schritt des Sendens einer negativen Bestätigung, falls der spezielle Fehlerkorrekturblock von einer Station, welche einen schlechten Block wiederherstellen soll, nicht korrekt empfangen wird.

20. Vorrichtung zum Empfangen von in einem Kommunikationsnetz gesendeten Daten, wobei die Vorrichtung umfasst:
einen Empfänger (627) zum sequentiellen Empfangen von Datenblöcken;
einen Detektor (802) zum Erkennen eines ersten Fehlers in einem Block übertragener Daten und eines zweiten Fehlers in einem folgenden Block übertragener Daten; und
**dadurch gekennzeichnet ist, dass** sie weiter umfasst:
einen Sender (820, 623) zum Senden einer negativen Bestätigungsnachricht, lediglich bei Erkennung des zweite Fehlers.

21. Vorrichtung zum Empfangen von Daten gemäß Anspruch 20, weiter umfassend einen Prüf summen-Detektor (808).

22. Vorrichtung zum Empfangen von Daten gemäß Anspruch 21, wobei der Prüfsummen-Detektor Fehlerkorrekturblöcke erkennt.

23. Vorrichtung zum Empfangen von Daten gemäß Anspruch 22, weiter umfassend einen Letzte-Prüfsumme-Detektor (809).

24. Vorrichtung zum Empfangen von Daten gemäß Anspruch 20, weiter umfassend einen Empfangsdaten-Puffer (810), welcher Datenblöcke und Fehlerkorrekturblöcke empfängt und speichert.

25. Vorrichtung zum Empfangen von Daten gemäß Anspruch 20, weiter umfassend einen mit dem Detektor gekoppelten Inkrementor (812), um einen Zähler hochzusetzen, wenn ein Fehler erkannt wird.

26. Vorrichtung zum Empfangen von Daten gemäß Anspruch 25, weiter umfassend einen mit dem Detektor gekoppelten Dekrementor (828), um einen Zähler herabzusetzen, wenn ein Fehler korrigiert wird.

27. Vorrichtung zum Empfangen von Daten gemäß Anspruch 26, weiter umfassend einen Zähler (814) zum Aufzeichnen von Fehlern in dem von dem Empfänger empfangenen Datenblock.

28. Vorrichtung zum Empfangen von Daten gemäß Anspruch 27, weiter umfassend einen NACK-Generator (820), welcher ein NACK-Signal erzeugt, wenn von dem Letzte-Prüfsumme-Detektor (809) eine letzte Prüfsumme erkannt wurde oder wenn von dem Daten-Prüfsummen-Detektor (808) ein Fehler in der Prüfsummer erkannt wurde, nachdem zwei Fehlerblöcke empfangen wurden.

29. Vorrichtung zum Empfangen von Daten gemäß Anspruch 20, weiter umfassend einen ersten Pointer (816), welcher die Position eines ersten Datenblocks mit einem Fehler in dem Empfangsdatenpuffer bezeichnet.

30. Vorrichtung zum Empfangen von Daten gemäß Anspruch 20, weiter umfassend einen zweiten Pointer (818) welcher die Position eines zweiten Datenblocks mit einem Fehler in dem Empfangsdatenpuffer bezeichnet.

31. Vorrichtung zum Empfangen von Daten gemäß Anspruch 20, weiter umfassend einen Datenwiederherstellungs-Manager (824), welcher in der Lage ist, die Daten in einem fehlerhaften Datenblock wiederherzustellen und den Dekrementor zu veranlassen, den Zähler herabzusetzen.

32. Vorrichtung zum Empfangen von Daten gemäß Anspruch 31, wobei der Datenwiederherstellungs-Manager (824) weiter das Senden eines NACK-Signals durch den NACK-Generator (820) initiiert, wenn der Datenwiederherstellungs-Manager ein Signal empfängt, welches anzeigt, dass ein Fehler in einem Letzte-Prüfsumme-Block erkannt wurde oder ein Fehler in der Prüfsumme erkannt wurde, wenn der Empfänger zwei Datenblockfehler erkannt hat.

33. Vorrichtung zum Übertragen von Daten von einer Sendestation zu wenigstens einer Empfangsstation in einem Kommunikationssystem, wobei die Vorrichtung umfasst:
Mittel zum sequentiellen Senden von Datenblöcken von der Sendestation aus; und
**dadurch gekennzeichnet ist, dass** sie weiter umfasst:
Mittel zum Empfangen einer negativen Bestätigungsnachricht von einer Empfangsstation, wobei die negative Bestätigungsnachricht anzeigt, dass ein erster Fehler in einem ersten Datenblock und ein zweiter Fehler in einem folgenden, zweiten Datenblock erkannt wurde; und
Mittel zum Senden eines Fehlerkorrekturblocks, um die Korrektur des ersten Fehlers in dem ersten Datenblock zu gestatten.

## Revendications

1. Procédé d'émission de données depuis un terminal d'émission vers au moins un terminal de réception dans un système de communication, ledit procédé comprenant les étapes consistant à :
émettre séquentiellement des blocs de données depuis ledit terminal émetteur (404) ;
et **caractérisé en ce qu'**il comporte en outre les étapes consistant à :
recevoir un message d'accusé de réception négatif (418) d'un terminal de réception, ledit message d'accusé de réception négatif (418) indiquant qu'une première erreur dans un premier bloc de données et qu'une seconde erreur dans un second bloc suivant (416) de données ont été détectées ; et
émettre (404) un bloc de correction d'erreur pour permettre la correction de la première erreur dans le premier bloc de données.

2. Procédé d'émission de données selon la revendication 1, dans lequel ladite étape d'émission d'un bloc de correction d'erreur comporte l'émission d'un bloc (404) ayant un XOR de tous les blocs avant la seconde erreur.

3. Procédé d'émission de données selon la revendication 1, dans lequel ladite étape d'émission séquentielle de blocs de données (404) comporte l'émission de blocs de données à une pluralité de terminaux de réception.

4. Procédé d'émission de données selon la revendication 3, comprenant en outre une étape de réception dudit bloc de correction d'erreur de chacun desdits terminaux de réception.

5. Procédé d'émission de données selon la revendication 4, comprenant en outre une étape de décodage (440), en chacun desdits terminaux de réception, dudit bloc XOR pour récupérer les données dans un premier bloc d'erreur détecté par ce terminal.

6. Procédé de réception de données en un terminal de réception d'un réseau de communication, ledit procédé comprenant les étapes consistant à :
recevoir séquentiellement (404) des blocs de données au terminal ;
détecter (408) une première erreur dans un bloc de données émises ;
détecter (408) une seconde erreur dans un second bloc suivant (416) de données émises ; et **caractérisé** en outre l'étape d'émission d'un message d'accusé de réception négatif (418) uniquement lors de la détection de la seconde erreur.

7. Procédé de réception de données selon la revendication 6, comprenant en outre une étape de détermination (406) si une erreur est détectée dans un bloc de données ou dans un bloc de correction d'erreur.

8. Procédé de réception de données selon la revendication 7, comprenant en outre une étape d'augmentation (414) d'un compteur d'erreurs lorsqu'une erreur est détectée.

9. Procédé de réception de données selon la revendication 6, comprenant en outre une étape de fixation (414) d'un premier indicateur d'erreur en un terminal de réception désignant le bloc ayant la première erreur.

10. Procédé de réception de données selon la revendication 9, comprenant en outre une étape de fixation (416) d'un second indicateur d'erreur en un terminal de réception désignant le bloc ayant la seconde erreur.

11. Procédé de réception de données selon la revendication 8, dans lequel ladite étape d'émission d'un accusé de réception négatif (418) comporte l'émission d'un accusé de réception négatif lors de la réception d'un bloc de données défectueux avant que le compteur d'erreurs ait été augmenté si ledit compteur d'erreurs est supérieur à 0.

12. Procédé de réception de données selon la revendication 8, dans lequel ladite étape d'émission d'un accusé de réception négatif (418) comporte l'émission d'un accusé de réception négatif lors de la réception d'un bloc de correction d'erreur défectueux si ledit compteur d'erreurs est supérieur à 1.

13. Procédé de réception de données selon la revendication 8, comprenant en outre une étape de maintien d'un accusé de réception négatif lors de la réception d'un bloc de correction défectueux si ledit compteur d'erreurs est inférieur ou égal à 1.

14. Procédé de réception de données selon la revendication 6, comprenant en outre une étape de réception (404, 406, 420) d'un bloc de correction d'erreur ayant des données permettant au terminal de réception de calculer les données correctes pour le bloc ayant la première erreur.

15. Procédé de réception de données selon la revendication 13, dans lequel ladite étape de réception (404, 406, 420) d'un bloc de correction d'erreur comporte la réception d'une émission d'un bloc ayant un XOR de tous les blocs avant la seconde erreur.

16. Procédé d'émission de données selon la revendication 15, comprenant en outre une étape de décodage dudit bloc XOR pour récupérer le bloc ayant la première erreur.

17. Procédé de réception de données selon la revendication 6, comprenant en outre une étape d'émission d'un bloc de correction d'erreur particulier qui couvre l'ensemble complet des données.

18. Procédé de réception de données selon la revendication 17, comprenant en outre une étape de chacun desdits terminaux mobiles qui ont une erreur de bloc extraordinaire recalculant la valeur correcte du premier bloc défectueux reçu par ce terminal.

19. Procédé de réception de données selon la revendication 18, comprenant en outre une étape d'émission d'un accusé de réception négatif si ledit bloc de correction d'erreur particulier est incorrectement reçu par un terminal qui a un bloc défectueux à récupérer.

20. Appareil pour recevoir des données émises dans un réseau de communication, ledit appareil comprenant :
un récepteur (627) pour recevoir séquentiellement des blocs de données ;
un détecteur (802) pour détecter une première erreur dans un bloc de données émises et une seconde erreur dans un bloc suivant de données émises ; et **caractérisé en ce qu'**il comporte en outre :
un émetteur (820, 623) pour émettre un message d'accusé de réception négatif uniquement lors de la détection de la seconde erreur.

21. Appareil de réception de données selon la revendication 20, comprenant en outre un détecteur de total de contrôle (808).

22. Appareil de réception de données selon la revendication 21, dans lequel ledit détecteur de total de contrôle détecte des blocs de correction d'erreur.

23. Appareil de réception de données selon la revendication 22, comprenant en outre un dernier détecteur de total de contrôle (809).

24. Appareil de réception de données selon la revendication 20, comprenant en outre une mémoire-tampon de données reçues (820) qui reçoit et mémorise des blocs de données et des blocs de correction d'erreur.

25. Appareil de réception de données selon la revendication 20, comprenant en outre un circuit d'augmentation (812) couplé audit détecteur pour incrémenter un compteur lorsqu'une erreur est détectée.

26. Appareil de réception de données selon la revendication 25, comprenant en outre un circuit de diminution (828) couplé audit détecteur pour diminuer un compteur lorsqu'une erreur est corrigée.

27. Appareil de réception de données selon la revendication 26, comprenant en outre un compteur (814) pour enregistrer des erreurs dans ledit bloc de données reçu par ledit récepteur.

28. Appareil de réception de données selon la revendication 27, comprenant en outre un générateur NACK (820) qui génère un signal NACK lorsqu'un dernier total de contrôle est détecté par ledit dernier détecteur de total de contrôle (809) ou lorsqu'une erreur dans le total de contrôle est détectée par le détecteur de total de contrôle de données (808) après réception de deux blocs d'erreur.

29. Appareil de réception de données selon la revendication 20, comprenant en outre un premier indicateur (816) qui désigne l'endroit d'un premier bloc de données ayant une erreur dans la mémoire-tampon de données reçues.

30. Appareil de réception de données selon la revendication 20, comprenant en outre un second indicateur (818) qui désigne l'emplacement d'un second bloc de données ayant une erreur dans la mémoire-tampon de données reçues.

31. Appareil de réception de données selon la revendication 20, comprenant en outre un gestionnaire de récupération de données (824) qui est apte à récupérer des données dans un bloc de données erroné, et à amener ledit circuit de diminution à diminuer ledit compteur.

32. Appareil de réception de données selon la revendication 31, dans lequel ledit gestionnaire de récupération de données (824) déclenche en outre l'émission d'un signal NACK par ledit générateur NACK (820) lorsque ledit gestionnaire de récupération de données reçoit un signal indiquant qu'une erreur a été détectée dans un dernier bloc de total de contrôle, ou qu'une erreur dans le total de contrôle a été détectée lorsque le récepteur a détecté deux erreurs de bloc de données.

33. Appareil d'émission de données depuis un terminal d'émission vers au moins un terminal de réception dans un système de communication, ledit appareil comprenant
des moyens pour émettre séquentiellement des blocs de données depuis ledit terminal d'émission ;
et **caractérisé en ce qu'**il comporte en outre :
des moyens pour recevoir un message d'accusé de réception négatif d'un terminal récepteur, ledit message d'accusé de réception négatif indiquant qu'une première erreur dans un premier bloc de données et qu'une seconde erreur dans un second bloc de données suivant ont été détectées ; et
des moyens pour émettre un bloc de correction d'erreur pour permettre la correction de la première erreur dans le premier bloc de données.
